# EUROPEAN PATENT APPLICATION

(11) **EP 1 324 565 A1**
(43) Date of publication of application: **02.07.2003**
(21) Application number: 02258540.0
(22) Date of filing: 11.12.2002
(51) Int. Cl.: H04L 29/06, G06F 1/00

(54) **Method and architecture for providing access to secured data from non-secured clients**

(30) Priority: 12.12.2001 US 339634 P; 12.02.2002 US 76254; 01.11.2002 US 286575
(71) Applicant: Pervasive Security Systems Inc., Menlo Park, California 94025 (US)
(72) Inventor: Ouye, Michael Michio, Portola Valley, California 94028 (US); Vainstein, Klimenty, Morgan Hill, California 95037-9518 (US)
(74) Representative: Ablett, Graham Keith

(57) **Abstract**

The present invention discloses various techniques for allowing non-secured clients to access secured data of an enterprise from a public network without compromising security integrity of the enterprise. According to one embodiment, a server, referred to as an interface server, is designated to interface with non-secured clients and coupled between a private network and a public network. The server can be one of local servers in a security system employed in an enterprise. In certain respects, the interface server is analogously placed in a "Demilitarized Zone", hence also referred to as a DMZ server. Through the DMZ server, some of the secured data in the enterprise can be accessed by the non-secured clients without compromising the security integrity of the enterprise.

## Description

The present invention relates to security systems for data and, more particularly, to security systems for providing access to secured data from non-secured clients without compromising security integrity of the systems, wherein the security data may include, but not be limited to, various secured files and secured parameters in the systems.

As organizations become more dependent on networks for business transactions, data sharing, and everyday communications, their networks have to be increasingly accessible to customers, employees, suppliers, partners, contractors, and telecommuters. But as the accessibility increases, so does the exposure of critical data that is stored on the network. Hackers can threaten all kinds of valuable corporate information resources including intellectual property (e.g., trade secrets, software code, and prerelease competitive data), sensitive employee information (e.g., payroll figures and HR records), and classified information (e.g., passwords, databases, customer records, product information, and financial data). Thus data security is becoming increasingly mission-critical.

Many organizations have deployed firewalls, Virtual Private Networks (VPNs), and Intrusion Detection Systems (IDS) to provide protection. Unfortunately, these various security means have been proven insufficient to reliably protect proprietary information residing on their internal networks. For example, depending on passwords to access sensitive documents from within often causes security breaches when the password of a few characters long is leaked or detected.

One of the ongoing efforts is to provide enterprise security solutions that intend to secure data within an enterprise premise (e.g., internal networks). Some of the enterprise security solutions, however, are noticed to have certain limitations in a collaborative environment in which both regular employees and short-term workers need to access some secured data. A dilemma sometimes arises as to whether these short-term workers should be provided with part of the enterprise security solutions. If yes, the security of other secured data could become vulnerable, if not, difficulty has to be overcome to permit access to some secured data from the non-secured clients.

There is, therefore, a need for solutions to providing access to secured data from non-secured clients without compromising the security integrity of an enterprise.

Broadly speaking, the present invention discloses various techniques for allowing non-secured clients to access secured data of an enterprise from a public network without compromising the security integrity of the enterprise. As used herein, a client may indicate a client machine, a client module, a client application or a user or users of a client machine. A secured client is known to, affiliated with or managed in an enterprise, a security system or an organization. Conversely, a non-secured client is not directly known to, affiliated with or managed in an enterprise, a security system or an organization. One example of a secured client is a full-time employee, another example of a secured client is a client machine. In either case, the secured client is within the premise of an enterprise or behind a security firewall. One example of a non-secured client is a short-term worker engaged to work on a project needs to access certain secured files in an enterprise. Another example of a non-secured client is a computer that is connected to a public network for accessing certain secured files of an enterprise. In either case, a non-secured client is not within the premise of an enterprise or behind a security firewall and typically from a public network.

According to one aspect of the present invention, a server, referred to as an interface server, is designated to interface with non-secured clients and coupled between a private network and a public network. The server can be one of local servers in a security system employed in an enterprise. In certain respect, the interface server is analogously placed in a "Demilitarized Zone", hence also referred to as a DMZ server. The local servers including the DMZ server are configured to cooperate with a central server providing centralized access control management for the enterprise. Through the DMZ server, some of the secured data in the enterprise can be accessed by the non-secured clients without compromising the security integrity of the enterprise.

According to another aspect of the present invention, some of the non-secured users are in another security system employed in another enterprise. Through an interface server which can be a server of either one of the security systems of the two enterprises. By virtue of the present invention, some of the respective secured data of the two enterprises can be commonly accessed to facilitate, for example, cooperation of tasks between the two enterprises.

According to still another aspect of the present invention, to simplify the implementation of the local servers, the interface server is configured no differently from the other local servers. As a central server can exchange critical data (i.e., any confidential information to an enterprise) with the local servers, the interface server could be in a position to receive the data and subsequently propagate the data to the non-secured clients. To ensure that no critical data will be released to the interface server and subsequently obtained by a non-secured client, the central server is configured to remove such data from a message destined for the interface server when it is determined that the data is confidential to the enterprise.

According to still another aspect of the present invention, various security logics among secured clients and non-secured clients are disclosed to ensure that under no circumstance, a non-secured client could penetrate into a security system by querying specific security information about the security system. Depending on applications, the present invention can be implemented as systems, methods, architectures, and software products, each yielding one or more of the features, advantages and benefits in the present invention. Several embodiments of the invention are discussed below.

As a security architecture, the present invention comprises a first server (e.g., a central server) configured to provide access control management of secured files for the enterprise, each of the secured files including an encrypted data portion and an access control portion providing restrictive access to the encrypted data portion; a number of secondary servers (e.g. local servers) coupled to the first server over a private network in the enterprise, one of the secondary servers being an interface server coupled between the private network and a public network; at least one client not belonging to the enterprise and coupled to the public network; and wherein the access control portion of some of the secured files includes an access policy for the external users so that the external users can access some of the secured files.

As another security architecture, the present invention comprises a first security system deployed in a first enterprise, the first security system including a first central server configured to provide access control management of first secured files for the first enterprise, each of the first secured files including an encrypted data portion and an access control portion providing restrictive access to the encrypted data portion; a number of first local servers coupled to the first central server over a first private network in the first enterprise. The present invention also comprises a second security system deployed in a second enterprise, the second security system including: a second central server configured to provide access control management of second secured files for the second enterprise, each of the second secured files including an encrypted data portion and an access control portion providing restrictive access to the encrypted data portion; a number of second local servers coupled to the second central server over a second private network in the enterprise; an interface server communicating between the first security system and the second security system, wherein the interface server in either one of the first local servers or one of the second local servers; and wherein some of the first secured files can be accessed by internal users of the second security system and some of the second secured files can be accessed by internal users of the first security system.

As a security method, the present invention comprises determining whether data being delivered from a central server to local servers are confidential to an enterprise, wherein the central server is configured to provide centralized access control management of secured files for the enterprise; determining whether any one of the local servers is an interface server that is coupled between a private network and a public network, wherein the interface server facilitates accessing to some of the secured files by an external user on the public network; and preventing the data from being propagated to the interface server when one of the local servers is the interface server.

Other implementations, objects, features, and advantages of the present invention will become apparent upon examining the following detailed description of an embodiment thereof, taken in conjunction with the attached drawings.

These and other features, aspects, and advantages of the present invention will become better understood with regard to the following description, appended claims, and accompanying drawings wherein:
FIG. 1 shows a basic system configuration in which the invention may be practised in accordance with an embodiment thereof;
FIG. 2 is an exemplary block diagram of securing a created file according to one embodiment;
FIG. 3A shows a functional block diagram of a server device according to one embodiment;
FIG. 3B shows a functional block diagram of a local server device according to one embodiment;
FIG. 4A shows a logic diagram of permitted queries among secured clients as well as non-secured clients according to one embodiment of the present invention;
FIG. 4B shows a process flowchart of determining whether a query from a client is permitted based on the client's relationship with the enterprise;
FIG. 5 shows a process flowchart of pushing secured information from a central server to corresponding local severs, wherein at least one of the local servers is a DMZ server;
FIG. 6A shows another configuration that is also referred to as a hub-hub symmetric configuration, which means that there are two separate centralized access control managements, each for one enterprise and its secured and non-secured clients;
FIG. 6B shows a logic diagram of permitted queries among internal and external users in reference to FIG. 6A according to one embodiment of the present invention;
FIG. 7A shows a configuration based on FIG. 1 and FIG. 6A and is referred to as a hybrid configuration including two security systems, each for an enterprise; and
FIG. 7B shows a logic diagram of permitted queries among internal and external users in reference to FIG. 7A according to one embodiment of the present invention.

The present invention relates to method and architecture for allowing non-secured clients to access secured data of an enterprise from a public network without compromising security integrity of the enterprise. As used herein, a client may indicate a client machine, a client module, a client application or a user or users of a client machine. A secured client is known to, affiliated with or managed in an enterprise, a security system or an organization. Conversely, a non-secured client is not directly known to, affiliated with or managed in an enterprise, a security system or an organization. One example of a secured client is a full-time employee, another example of a secured client is a client machine. In either case, the secured client is within the premise of an enterprise or behind a security firewall, and typically from a public network. One example of a non-secured client is a short-term worker engaged to work on a project needs to access certain secured data in an enterprise. Another example of a non-secured client is a computer that is connected to a public network for accessing certain secured data of an enterprise. In either case, a non-secured client is not within the premise of an enterprise or behind a security firewall.

According to one aspect of the present invention, to ensure that the DMZ server will not subsequently release critical data to the non-secured client(s), another server, sometimes referred to as a central server, providing centralized access control management, is configured to remove any critical data in messages destined for the DMZ server. According to another aspect of the present invention, various security logic means are employed to ensure that non-secured clients have only controlled and limited access to the security system of the enterprise. Together with other aspects and embodiments that are to be described below, numerous features, benefits and advantages can be appreciated in the present invention. One of the features, benefits and advantages is the mechanism developed for one or more security systems for providing access to certain secured data from non-secured clients without compromising the security integrity of the security systems. Another one of the features, benefits and advantages is that there is no need to deploy a server at a non-secured client site to provide access control management for those non-secured clients to access the secured data. Still another one of them is that all local servers including the DMZ server are implemented in the same way, while the DMZ server is identified and all data thereto is controlled by a central server to ensure no critical data is subsequently released to the non-secured clients. Other features, benefits and advantages of the present invention will be appreciated in the following description, accompanying drawings and appended claims.

In the following description, numerous specific details are set forth in order to provide a thorough understanding of the present invention. However, it will become obvious to those skilled in the art that the present invention may be practised without these specific details. The description and representation herein are the common meanings used by those experienced or skilled in the art to most effectively convey the substance of their work to others skilled in the art. In other instances, well-known methods, procedures, components, and circuitry have not been described in detail to avoid unnecessarily obscuring aspects of the present invention.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments. Further, the order of blocks in process flowcharts or diagrams representing one or more embodiments of the invention do not inherently indicate any particular order nor imply any limitations in the invention.

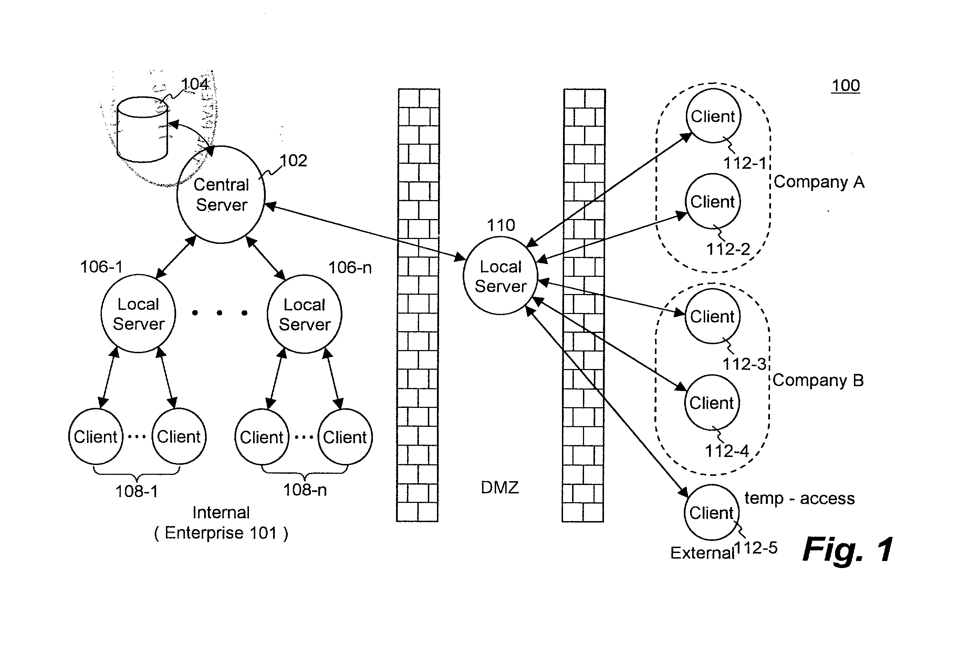

Embodiments of the present invention are discussed herein with reference to FIGs. 1A - 7, in which like numerals refer to like parts throughout the several views. However, those skilled in the art will readily appreciate that the detailed description given herein with respect to these figures is for explanatory purposes as the invention extends beyond these limited embodiments.

Referring now to FIG. 1, there is shown a system configuration 100 according to one embodiment of the present invention. The system configuration 100 is also referred to as a hub-spoke asymmetric configuration, which means that there is only one centralized access control management for both secured and non-secured clients. A central server 102 is configured or loaded with a server module (not shown) that is executable to provide the centralized access management for users with a need to access secured data in an enterprise environment 101. The secured data may include, but not be limited to, various secured files and secured parameters in the systems. To facilitate the description of the present invention, as part of the secured data for a security system, unless specified, a secured file(s) or a secured document(s) are used below. Further, as used herein, a user may mean a human user, a software agent, a group of users, a member of the group, a device and/or application. Besides a human user who needs to access a secured document, a software application or agent sometimes needs to access secured files in order to proceed forward. Accordingly, unless otherwise stated, the "user" as used herein does not necessarily pertain to a human being. In general, the users within an enterprise are referred to as secured clients as opposed to non-secured clients outside the enterprise.

According to one aspect of the present invention, the server module is configured to provide various access policies (or rules) for secured files and access privileges for the users across an entire enterprise 101. In addition, various software agents can be created, updated and managed from or in the server module so that the users with the proper access privileges can access the secured files in various conditions. In one embodiment, the central server 102 is coupled to a database 104 that hosts various types of user information, the access rules, and information about designated locations in which secured files are managed according to their respective security types. Alternatively, multiple computing devices may be employed to operate as a central server.

To provide the dependability, reliability and scalability of the centralized access control management undertaken by the central server 102 for an entire enterprise or a business location, a number of intermediate or local servers 106 are employed. Each of the local servers 106 is configured to service a group of client machines 108-1, 108-2, ... 108-n, all are on the internal network (e.g., a local area network) belonging to the enterprise 101. Depending on implementation, the number of local servers 106 is determined by the scale or distribution of an enterprise. In a rare situation in which there are very few users, no local servers may be used such that the users are managed directly by the central server 102. In any case, each of the local servers 106 has its own customized replication of the server module. Additional detailed descriptions of the local servers 106 in cooperation with the central server 102 are provided in co-pending US Patent Application No.: 10/076,254.

Identified differently from the local servers 106, another local server 110 is designated to service non-secured clients, for example, client machines 112 or the users thereof that are on an external network. Although not required, the local server 110 is preferably to be protected by certain security (such as a firewall) from being used as an entrance to the internal network 101. The client machines 112 are typically those computing devices that are logged onto local server 110 from other than the internal network (i.e., the Internet). With the deployment of the local server 110, users of the client machines 112 may access certain secured files granted to be accessed externally by the non-secured users. Typically, the users of these client machines 112 are those who are not directly affiliated with or managed by the enterprise 101 or are typically on short-term projects for the enterprise. For example, the client machines 112-1 and 112-2 are on an internal network of Company A that is being engaged to perform certain services for the enterprise 101. With the configuration 100, an authorized user of the client machines 112-1 or 112-2 can access some of the secured files belonging to the enterprise 101. Similarly, a contractor or short-term worker may access some of the secured files from a computing device 112-5 on a network other than the internal network (e.g., the Internet).

To facilitate the operations of the configuration 100 of FIG. 1, it is preferable to use a secured format in which files can be secured and controlled for access thereto. Generally, a content created by a creator for the purpose of an entity is an intellectual property belonging to the creator or the entity. In an enterprise, any kind of information or intellectual property can be content, though it is commonly referred to as "information" instead of "content". In either case, content or information is independent of its format, it may be in a printout or an electronic document. As used herein, content or information exists in a type of electronic data that is also referred to as a digital asset or simply a file. A representation of a file may include, but not be limited to, various types of documents, multimedia files, streaming data, dynamic or static data, executable code, images and texts. In general, a secured format for securing files includes at least two portions, one being secured data portion representing a file being secured and the other being a security portion providing restrictive access to the secured data portion.

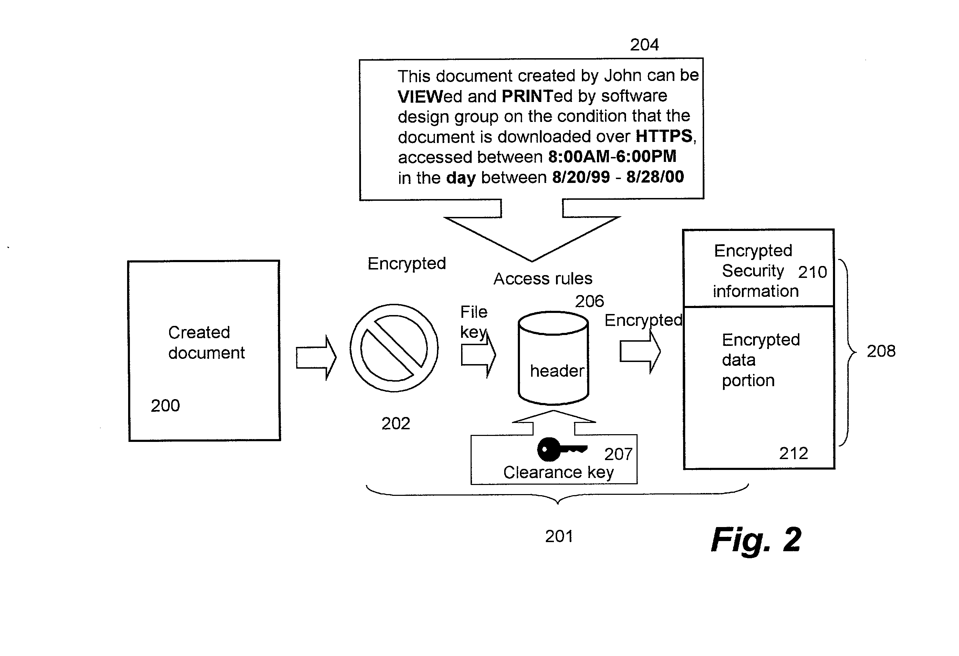

FIG. 2 shows a block diagram of securing a file 200 according to an exemplary format that may be used to practice the present invention. After a file 200 (e.g., a Microsoft Word file, xyz.doc) is created, edited or opened with an application or authoring tool (e.g., Microsoft WORD), upon an activation of a command, such as "Save," "Save As" or "Close", or automatic saving invoked by an operating system, the application itself, or another application, the file 200 is caused to undergo a securing process 201. The securing process 201 starts with an encryption process 202, namely the file 200 that has been created or is being written into a store is encrypted by a cipher (e.g., an encryption process) with a file key (i.e., a cipher or encryption key). In other words, the encrypted data portion 212 could not be opened without the file key. For the purpose of controlling the access to the contents in the file 200 or the resultant secured file 208, the file key or keys which may be the same or different keys for encryption and decryption are included as part of security information contained in or pointed to by a header 206. The file key or keys, once obtained, can be used to decrypt the encrypted data portion 212 to reveal the contents therein.

To ensure that only authorized users or members of an authorized group can access the secured file 208, a set of access rules 204 for the file 200 is received or created and associated with the header 206. In general, the access rules 204 determine or regulate who and/or how the file 200, once secured, can be accessed. In some cases, the access rules 204 also determine or regulate when or where the secured file 208 can be accessed.

In addition, security clearance information 207 may be added to the header 206 if the contents therein or secured file 208 is classified. In general, the security clearance information 207 is used to determine a level of access privilege or security level of a user who is attempting to access the contents in the secured file 208. For example, a secured file may be classified as "Top secret", "Secret", "Confidential", and "Unclassified". According to one embodiment, the security clearance information 207 includes another layer of encryption of the file key with another key referred to herein as a clearance key. An authorized user must have a clearance key of proper security level in addition to an authenticated user key and proper access privilege to retrieve the file key. As used herein, a user key or a group key is a cipher key (e.g., a public key) associated with an authenticated user and may be used to access a secured file or secure a file, or create a secured file.

According to another embodiment, the security clearance information 207 includes a set of special access rules to guard the file key. The retrieval of the file key requires that the user passes an access rule measurement. Since the access privilege of a user may be controlled via one or more system parameters (e.g., rules or policies), the access rule measurement can determine if the user has sufficient access privilege to retrieve the file key in conjunction with the corresponding user key.

In general, a header is a file structure, preferably small in size, and includes, or perhaps links to, security information about a resultant secured file. Depending on implementation, the security information can be entirely included in a header or pointed to by a pointer that is included in the header. The security information further includes the file key and/or one or more clearance keys, in some cases, an off-line access permit (e.g., in the access rules) should such access be requested by an authorized user. The security information is then encrypted by a cipher (i.e., an en/decryption scheme) with a user key associated with an authorized user to produce encrypted security information 210. The header 206 is added to, attached to or integrated with the encrypted data portion 212 to generate the resultant secured file 208. In a preferred embodiment, the header is placed at the beginning of the encrypted document (data portion) to facilitate an early detection of the secured nature of a secured file.

In essence, the secured file 208 includes two parts, the encrypted data portion 212 (i.e., encrypted version of the file itself) and the header 210 that may point to or include encrypted security information for the secured file 208. To access the contents in the encrypted data portion 212, one needs to obtain the file key to decrypt the encrypted data portion 212. To obtain the file key, one needs to be authenticated to get a user or group key and pass an access test in which at least the access rules in the security information are measured against the user's access privilege (i.e., access rights). If the secured file is classified, it further requires a security level clearance on the user. In general, the security clearance level of the user must be high enough before the file key can be retrieved.

To facilitate the description of the present invention, it is assumed in the following that a secured file is not classified. Those skilled in the art can appreciate that the following description can be equally applied to secured items that are classified.

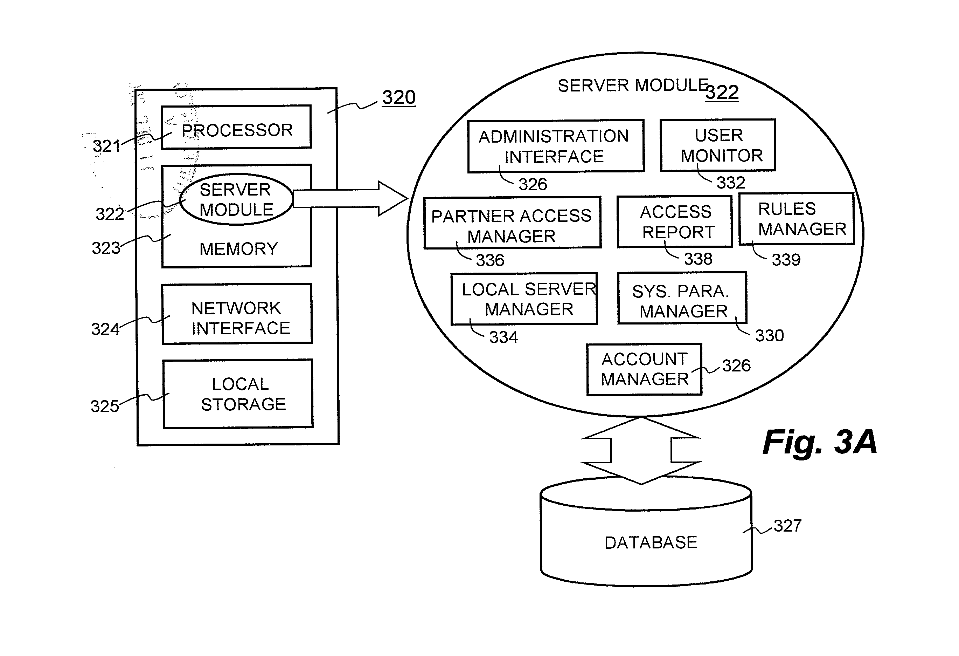

FIG. 3A shows a functional block diagram of a server device 320 in which a server module 322 resides in a memory space 323 and is executable by one or more processors 321. The server device 320 also includes a network interface 324 to facilitate the communication between the server 320 and other devices on a network and a local storage space 325. The server module 322 is an executable version of one embodiment of the present invention and delivers, when executed, features/results contemplated in the present invention. According to one embodiment, the server module 322 comprises an administration interface 326, an account manager 328, a system parameter manager 330, a user monitor 332, a local server manager 334, a partner access manager 336, an access report manager 338, and a rules manager 339.

Administration interface 326:
As the name suggests, the administration interface 326 facilitates a system administrator to register users and grant respective access privileges to the users and is an entry point to the server module from which all sub-modules or the results thereof can be initiated, updated and managed. In one embodiment, the system administrator sets up hierarchy access levels for various active folders, storage locations, users or group of users. The privileges may include, but not be limited to: open, edit write, print, copy, download and others. Examples of the other privileges are: altering access privileges for other users, accessing secured documents from one or more locations, and setting up a set of access rules for a folder different from those previously set up (perhaps by the system administrator). The respective user IDs assigned to the users facilitate the management of all the users. In general, a user who will access a secured document is associated with a user key to allow an encrypted header in a secured document to be unlocked (decrypted). The expiration and regeneration of a user key may be initiated by the system administrator. According to one embodiment, the administration interface 326 is a user graphic interface showing options for various tasks that an authenticated system administrator or operator may need to perform.

Account manager 328:
Essentially, the account manager is a database or an interface to a database 327 (e.g., a relational database) maintaining all the registered users and their respective access privileges, and perhaps corresponding user keys (e.g., private and public keys). In operation, the account manager 328 authenticates a user when the user logs onto the server 320 and also determines whether the user can access secured documents being requested from the location the user is currently at.

System parameters manager 330:
This module is configured to manage system parameters within the server module 322. These system parameters include, for example, user access privileges, system policies, and user keys. The system parameters manager 330 can be used to add, delete or modify any of the system parameters. The system parameters manager 330 can also interact with local modules in local servers and client modules in client machines to provide, update and manage the system parameters to these distributed modules. For example, a user key can be expired (deleted) for security reasons when a user leaves the organization or when its time to replace the user key. The system parameters can be supplied to local modules and client modules by a "push" of system parameters to the other distributed modules or by a response to a "pull" request for updated system parameters. Optionally, the system parameters manager 330 may be further configured to act as a key manager managing all keys used in an enterprise.

User monitor 332:
This module is configured to monitor user's requests and whereabouts. Typically, a user is granted to access secured documents from one or more designated locations or networked computers. If a user has a higher access privilege (e.g., to permit to access from other than the locations or networked computers), the user monitor 332 may be configured to ensure that the user can have only one access from one of the registered locations or computers at all times. In addition, the user monitor 332 may be configured and scheduled to interact with the system parameters manager 330 to "push" an update of system parameters or respond to a "pull" request for an update of system parameters pertaining to a specified user.

Local server manager 334:
This module is designed to be responsible for distributing an appropriate local module for a local server servicing a predetermined location or a predetermined group of users. According to one embodiment, the local server manager 334 replicates some or all of the server module 322 being executed on the server 320 and distributes the replicated copy to all the local servers. As a result, a user can access secured documents anywhere within the network premises covered by the local servers without being authenticated at a single central server, namely the server 320. According to one embodiment, the local server manager 334 replicates some of the server module 322 being executed on the server 320 and distributes the replicated copy to a corresponding local server. In this embodiment, each of the local servers will have its own customized replication from the server module 322. In the context of the present invention, the local server manager 334 can be configured to ensure that no critical data shall be subsequently released to the non-secured clients. According to one embodiment, a DMZ server is labelled with an identifier that facilitates the local server manager 334 to monitor what data comes from or goes to the DMZ server.

Partners access manager 336:
A special module to manage non-employees accounts, such as those for the non-secured clients. The partners access manager 336 generally works in accordance with other modules in the server but puts additional restrictions on such users being directly managed by the partners access manager 336. In one application, the partners access manager 336 generates a request to the key manager to expire a key or key pair for a consultant when an engagement with the consultant ends.

Access report manager 338:
A module is configured to record or track possible access activities and primarily works with a corresponding sub-module in a client module being executed in a client machine. The access report manager 338 is preferably activated by the system administrator and the content gathered in the access report manager 338 is typically only accessible by the system administrator.

Rules Manager 339:
In general, the rules manager 339 is an enforcement mechanism of various access rules. According to one aspect, the rules manager 339, together with the system parameters manager 330, is configured to specify various rules based on i) data types (e.g., Microsoft Word), ii) group users or individual, iii) applicable system or file access rights, and iv) duration of access rules. Typically, a set of rules is a policy (namely, a security policy). A policy can be enabled, disabled, edited, deployed and undone (e.g., one or two levels). Policies managed by the rules manager 339 operate preferably on a global level. The rules (as well as other system parameters) are typically downloaded to the client machine during the login process (after the user is authenticated) and can be updated dynamically. In addition, respective policies or rule sets may be associated with active folders (i.e., those designated places to store secured documents).
These policies are also downloaded and updated on the client machine. Simple policies can also be embedded in the document and provide document specific policies.

It should be pointed out that the server module 322 in FIG. 3A lists some exemplary modules according to one embodiment of the present invention and not every module in the server module 322 has to be implemented in order to practice the present invention. Those skilled in the art can understand that given the description herein, various combinations of the modules as well as modifications thereof without departing the spirits of the present invention, may achieve various desired functions, benefits and advantages contemplated in the present invention.

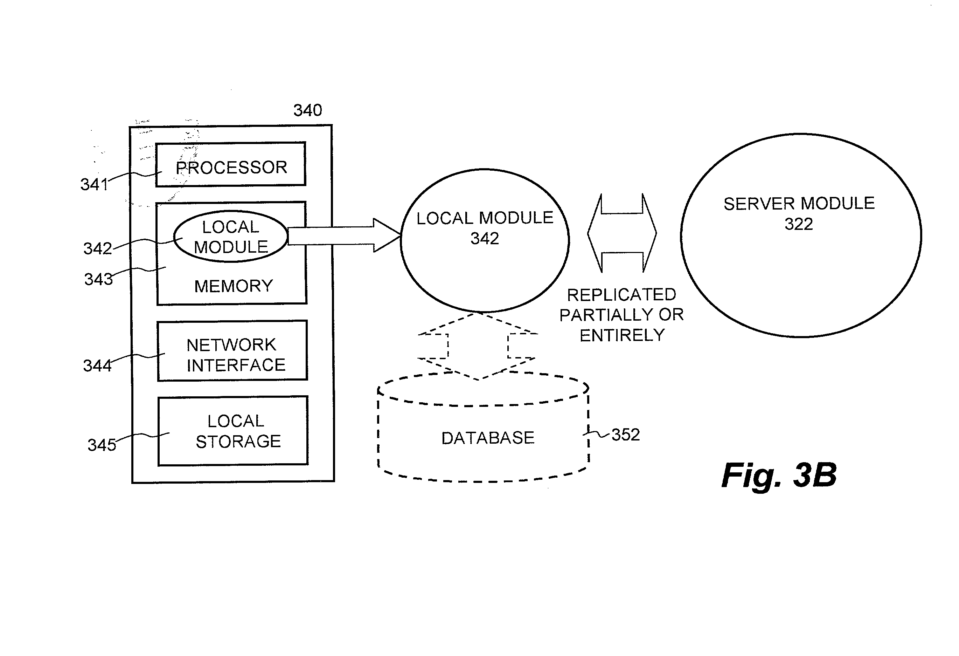

FIG. 3B shows a functional block diagram of a local server device 340. The local server device 340 executes a module, referred herein as a local module 342 which is configured to be a complete or partial replication of the server module 322 of FIG. 3A. The local server device 340 is generally similar to that of a server as illustrated in FIG. 3B. Namely, the local server device 340 includes one or more processors 341, a memory space 343, a network interface 344, and a local storage space 345. Given the similarity, many parts illustrated in FIG. 3C are not to be described again to avoid obscuring aspects of the present invention. As one of the features in the present invention, the local module 342 provides the dependability, reliability and scalability of the centralized access control management being undertaken by the central server 320 of FIG. 3A. As such, for example, not all authentication requests need to be handled at one central point without losing control of the access control management. As another feature of the present invention, the users are not affected if the central server is brought down for maintenance and the connection to the central server is not available. If a number of local servers are used and each has a replication of the server module, the reliability of servicing the users is greatly enhanced. As a result, the local users need only to check with the corresponding local server and none of the users would be affected if other local servers are down for whatever reasons or disconnected from the central server.

In the context of the present invention, no central server (e.g., the database 327 thereof) is provided to non-secured clients, information about the non-secured clients is stored and managed in the central server 320. According to one embodiment, some data objects in the database of a security system are marked as pertaining to either secured or non-secured clients, thus providing a logical distinction between non-secured clients and secured clients while other data objects in the database can pertain to both types of clients. For example, one data object pertains to membership information of a group of secured clients and another data object pertains to membership information of a joint group of both secured clients and non-secured clients.

To protect the security integrity in an enterprise, the non-secured clients are provided with limited query access. According to one embodiment, for example:
- A DMZ server is not allowed to query private keys (or other cryptographic identifiers) of the groups or users in the enterprise;
- A DMZ server is not allowed to query secured users;
- Other local servers (excluding the DMZ server) are restricted from querying the non-secured clients;
- A DMZ local server is allowed to query names, but not memberships, of a group of internal users;
- Other local servers (excluding the DMZ server) are not allowed to query non-secured groups;
- A DMZ local server is not allowed to query the state of other local servers or the central server(s).

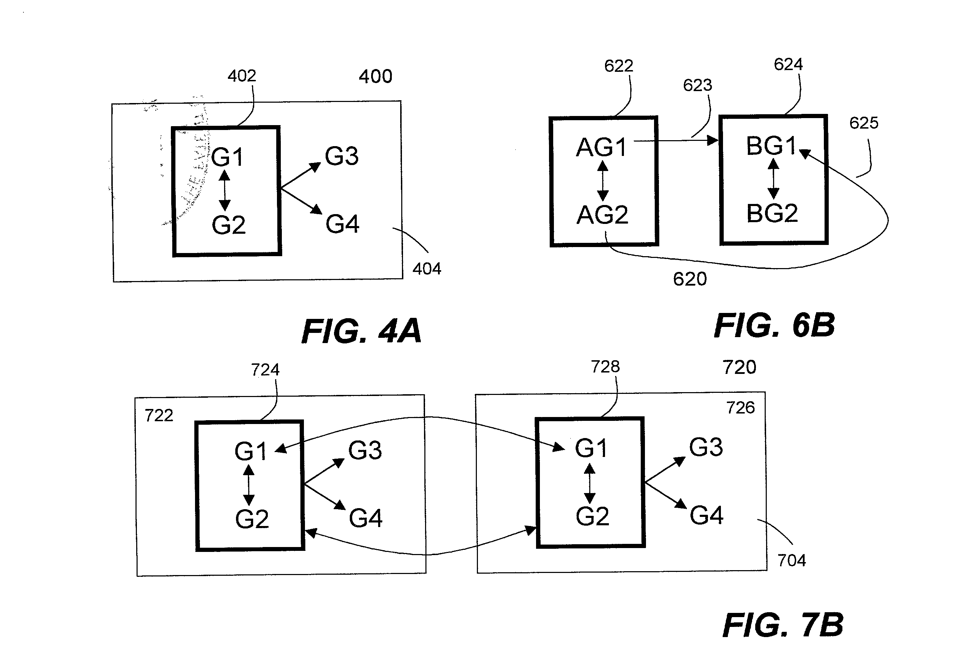

FIG. 4A shows a logic diagram 400 among secured clients as well as non-secured clients. For illustration only, the thick rectangle 402 representing an enterprise premise encloses the secured clients (e.g., internal groups or users in an enterprise premise) and the thin rectangle 404 encloses all non-secured clients (e.g., external groups or users) that are "attached" to the enterprise premise to access certain secured files therein. From the perspective of the access control management, the respective abilities to query other groups (including member users) must be configured properly to preserve the security integrity of the enterprise. It is assumed that groups G₁ and G₂ are the secured clients, and groups G₃ and G₄ are non-secured clients. Ordinarily, (members of) G₁ and G₂ can query each other since G₁ and G₂ are the internal users of the enterprise. However, it can be configured that G₁ or G₂ may or may not query G₃ or G₄, while G₃ or G₄ cannot query each other because both are considered non-secured clients to the thick rectangle 402 representing an enterprise premise. According to one embodiment, exceptions are made in the following exemplary circumstances:
- G₂ can view G₃, if G₂ and G₃ are in a partner relationship.
- G₂ can view G₃, if G₂ is a manager of G₃.
- G₃ can view G₄, if either G₃ is member of G₄, or G₄ is member of G₃.
- G₄ can view G₁, if G₄ and G₁ are in a partner relationship, as above.

A partner relationship is a bilateral permission that can exist between a secured user (group) and a non-secured (group). For example, G₃ is engaged to work jointly with G₂ on a project, hence all members in G₃ and G₂ may be allowed to query each other. Alternatively, a partner relationship can be a unilateral permission that allows only the secured clients to query the non-secured clients, not the other way around.

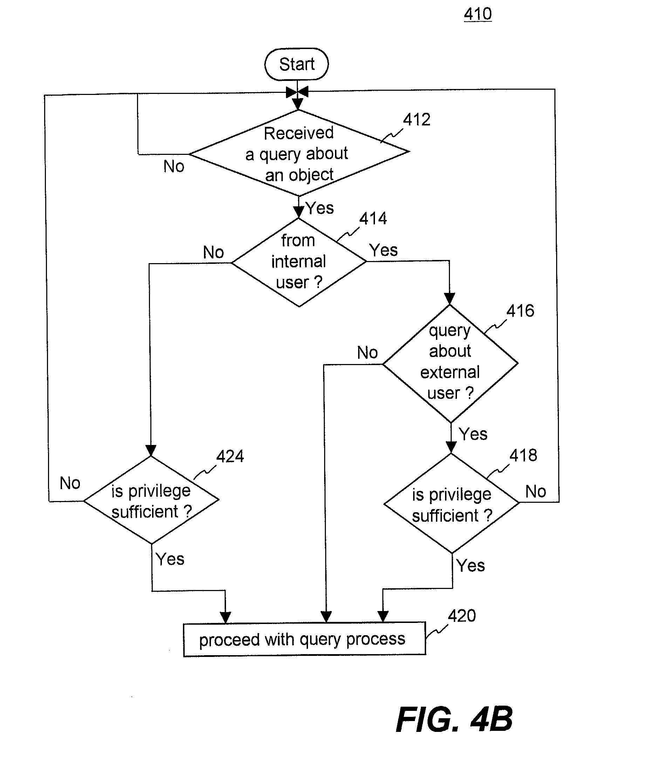

FIG. 4B shows a process flowchart 410 of determining whether a query about an object from a client is permitted based on the client's relationship with the enterprise. The process 410 is activated whenever a query request is initiated or received. At 412, the process 410 awaits a query request. When such request is received, the process 410 proceeds to 414 where it is determined whether the query request is from an internal or external user. It is first assumed that the query request is from an internal user, the process 410 now goes to 416.

At 416, the query is examined to determine whether it pertains to an internal or external user or group (i.e., the object). If the query pertains to an internal user or a group, the process 410 goes to 420 to proceed with the query request. If the query pertains to an external user or a group, at 418, the process 410 needs to determine if the query is from a user with sufficient privilege. In general, a security system is configured to allow users with sufficient privilege to query information about external users or groups, for example, a manager in a project group involving external users. In this case, if it is determined that the query requestor does not have the privilege, the query request is denied and the process 410 goes back to 412 to await another query request, otherwise, the process 410 goes to 420 to proceed with the query request.

Now going back to 414, it is assumed that the query request is from an external user, thus the process 410 goes to 424 to determine whether the query requestor is authorized to do so. Depending on the privilege of the external user to query the object, a query may be granted or denied. If the object being queried is permitted given the privilege of the external user, the process 410 goes to 420 to proceed with the query request, otherwise, the process 410 goes to 412 to await another query request. For example, there is a permission or relationship P(G1, G4) between an internal user G1 and an external user G4. If the external user G4 intends to query about G2, the query request will be denied, only a query request about G1 will be granted.

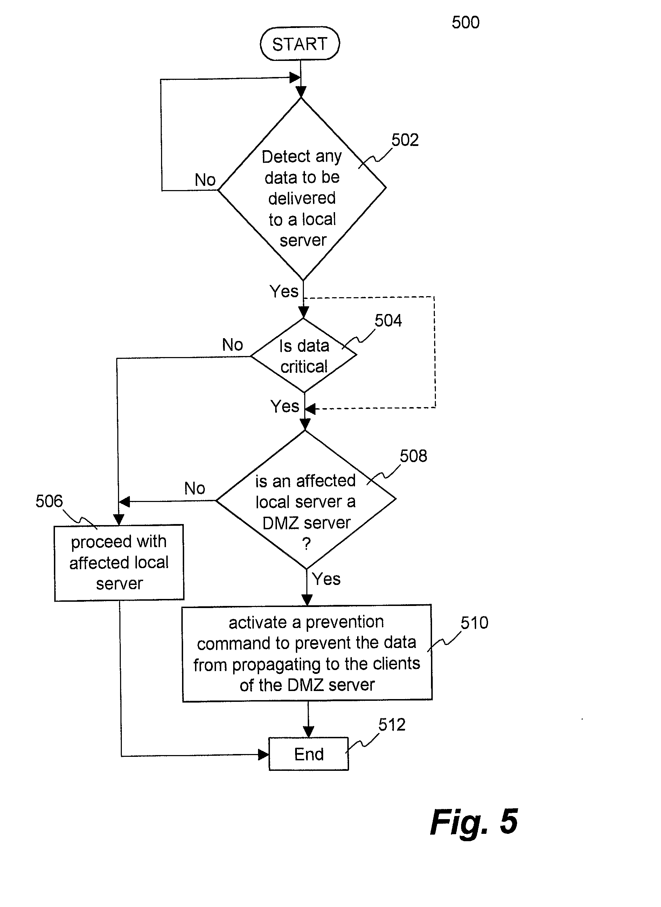

In any case, according to one aspect of the present invention, critical data, which may be broadcast from a server or requested as a result of a query, is scrutinized with respect to its destination. Referring now to FIG. 5, there shows a process flowchart 500 of pushing secured information from a central server to corresponding local severs, wherein at least one of the local servers is a DMZ server. The central server may correspond to the server 102 of FIG. 1, the local servers may correspond to the servers 106 and the DMZ server may correspond to the server 110. In some instances, a central server needs to broadcast certain data to all of the local servers as well as all the secured clients or sometimes multicast certain data to some of the local servers or some the secured clients. In other instance, the central server needs to respond to query from one of the local servers. The data can be critical to the security integrity of the enterprise. For example, the data includes a policy update that may affect access rights to certain users. One exemplary application in which an update/change to a policy is described in U. S. Patent Application No.: 10/186,203. Because the security system supports non-secured clients, the release of such data to the non-secured clients is not desirable and could jeopardize the security integrity of the security system. The process 500 provides means for preventing such data from being delivered to a DMZ server or the subsequent non-secured clients.

At 502, the process 500 awaits any data to be delivered to a local server and starts to proceed forward as soon as it detects that a piece of data is to be delivered to one or more local servers. The data to be delivered may be generated or provided in the central server, perhaps, in response to an event or a query. For example, an event is to update a user key for a group of secured clients while a query is from one of the local servers to download settings for a protected folder in which all files have substantially similar security. In either case, the response (i.e., the data) to the event or query should not be released to any of the non-secured clients. At 504, the data may be determined if it is critical. If the data is not critical, the process 500 goes to 506 where the data is released to the affected local servers. For example, a system administer sends a service down time note to all users via the local servers, the data containing such notice is not deemed critical and hence can be proceeded at 506. A description of how data can be effectuated in a local server or a client is provided in U. S. Patent Application No.: 10/186,203. The process 500 ends at 512.

On the other hand, when it is determined that the data is critical, the process 500 goes to 508 to determine if any of the affected local servers is a DMZ server. According to one embodiment of the present invention, all the local servers including the DMZ servers shall have substantially similar local server modules, which help facilitate the deployment of a DMZ server with causing additional development effort. Hence, in theory, a DMZ, like other local servers, may be caused to request any information from the central server. However, one of the features in the process 500 is to prevent any critical information from leaking to the DMZ server.

Accordingly, at 508, when it is detected that none of the affected local servers is a DMZ server, the process 500 goes to 506 to proceed with the delivery of the data. When it is detected that one of the affected local servers is a DMZ server, the process 500 goes to 510 in which at least one measure is to take place. In one embodiment, a command is initiated in the central server and delivered to the DMZ server. The command can cause the DMZ server not to further release the data to its non-secured clients. U. S. Patent Application No.: 10/186,203 lists some of the commands that can be initiated in a central server to be carried out in a local server. According to another embodiment, the critical information in the data to be delivered to a DMZ server is simply removed. In other words, the DMZ can receive a piece of "normal" data containing void or emptied information as a result of the critical information being deleted before the data is sent out. The process 500 then ends at 512.

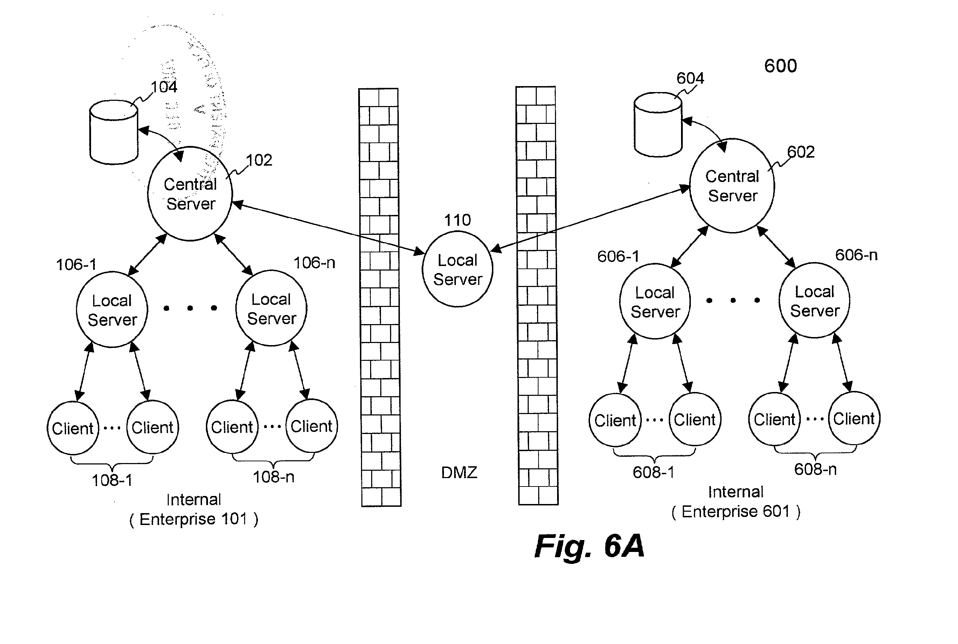

FIG. 6A shows another configuration 600 that is also referred to as a hub-hub symmetric configuration, which means that there are two separate centralized access control managements, each for one enterprise and its secured and non-secured clients. For simple illustration, the configuration 600 is a revised replication of FIG. 1 with the non-secured clients replaced by another security system in an enterprise 601, hence the name of a symmetric configuration. The configuration 600 applies to two or more enterprises, where each maintains its security system. In a collaborative situation, two enterprises may need to share certain secured files. In other words, a secured file in the enterprise 101, by virtue of the present invention, can be accessed by designated users in the enterprise 601 or vice versa without compromising the respective security integrity in each of the enterprises.

According to one embodiment, a DMZ server 110 becomes an interface server between the two enterprises 101 and 601. The DMZ server 110 can be a local server of the central server 102 or 602 or two separate local servers, each being a local server of the central server 102 or 602. As a result, the other enterprise becomes a non-secured client of one enterprise. For example, some users in the enterprise 601 can be the non-secured clients of the enterprise 101 via the DMZ server 110. In other words, a secured file of the enterprise 101 can be access by a non-secured client in the enterprise 601.

In operation, for communication between two enterprises 101 and 601 to take place without compromising each other's security integrity, a unilateral *partner* relationship shall exist. A unilateral *partner* relationship 623 allows users of some specific groups (e.g., AG1) in Enterprise A, to query the names of groups in Enterprise B, as logically shown in FIG. 6B. For example, privileged users of Enterprise A control which of the groups in Enterprise A may query the names of groups in Enterprise B. According to one embodiment, a partner relationship involves A's certificate being stored in B's database. The authorized users in A are then allowed to query names, but not memberships, of B's groups. Further, a *group partner* relationship 625 may exist between two groups of two respective enterprises. A group partner relationship allows group membership query. The authorized users (e.g., AG2) in enterprise A are then also allowed to request public keys of B's groups (e.g., BG1); these are sent signed with B's certificate (as explained below). It may also be possible to further restrict retrieval of B's groups' public keys, per the partner relationship. In other words, a group partner relationship always assumes the existence of the partner relationship. It should be noted that FIG. 6A can be expanded to N enterprises in collaboration, hence sometimes referred to as N-hub infrastructure. As a result, certain secured files can be commonly accessed among some or all of the N enterprises.

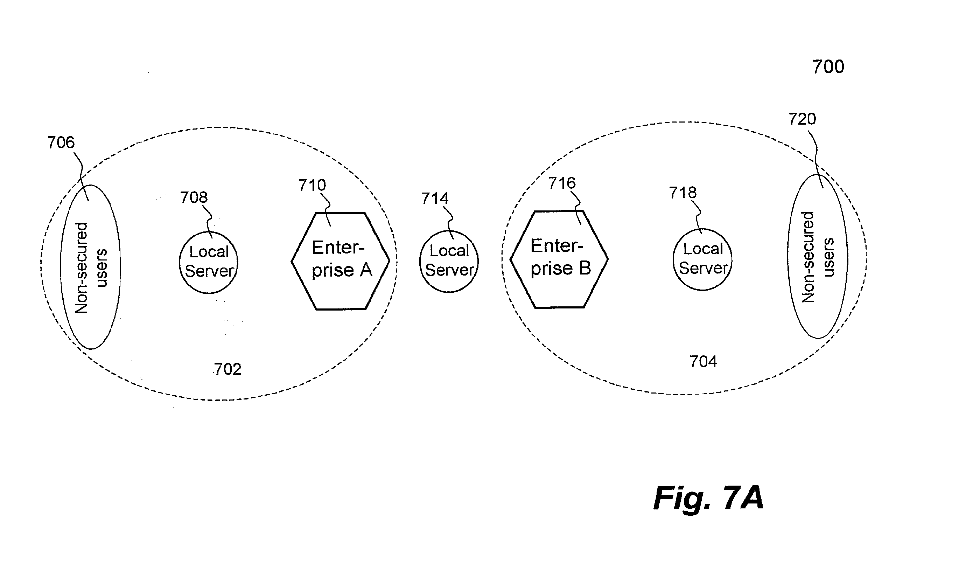

FIG. 7A shows a configuration 700 based on FIG. 1 and FIG. 6A and is referred to as a hybrid configuration. The configuration 700 includes two security systems 702 and 704, each for an enterprise. Similar to FIG. 1, each of the security systems 702 and 704 has its own non-secured clients 706 and 720. In particular, the non-secured clients 706 are permitted to access certain secured files of enterprise A via a DMZ server 708 and the non-secured clients 720 are permitted to access certain secured files of enterprise B via a DMZ server 718.

With another DMZ server 714 that may be one of the local servers of enterprise A or enterprise B, internal users of each of the enterprises A and B can participate in both hub-hub and hub-spoke relationships discussed above in reference to FIG. 1 and FIG. 6A, a logic diagram 720 including two hub-spoke relationships 722 and 726 is shown in FIG. 7B. The operation of FIG. 7A can be readily understood in view of the above descriptions.

The present inventions can be implemented as systems, methods, architectures, and software products, each yielding one or more of the features, advantages and benefits in the present invention. One of the features, advantages and benefits is that the flexible mechanism that allows non-secured clients to access certain secured files without compromising security integrity of an enterprise. Another one of the features, advantages and benefits is that those non-secured clients do not need to be provided with additional access control management, in many cases, these none-secured clients need to be only provided with a client module configured to work with the security system of the enterprise. To facilitate communication among different enterprises, still another one of the features, advantages and benefits is that an interface server is provided to bridge two enterprises without compromising security integrity of each of the two enterprises. Other features, advantages and benefits may be appreciated from the foregoing description.

The present invention has been described in sufficient details with a certain degree of particularity. It is understood to those skilled in the art that the present disclosure of embodiments has been made by way of examples only and that numerous changes in the arrangement and combination of parts may be resorted without departing from the spirit and scope of the invention as claimed. Accordingly, the scope of the present invention is defined by the appended claims rather than the foregoing description of embodiments.

## Claims

1. A security architecture comprising:-
a security system deployed in an enterprise, the security system including:-
a first server configured to provide access control management of secured files for the enterprise, each of the secured files including an encrypted data portion and an access control portion providing restrictive access to the encrypted data portion;
a number of secondary servers coupled to the first server over a private network in the enterprise, one of the secondary servers being an interface server coupled between the private network and
a public network; and
at least one client not belonging to the enterprise and coupled to
the public network;
wherein the access control portion of some of the secured files includes an access policy for the external users so that the external users can access some of the secured files.

2. A security architecture according to Claim 1, wherein the external users are in a group including at least an internal user of the enterprise.

3. A security architecture according to Claim 1 or 2, wherein the access policy is for the internal user so that the internal user can access some of the secured files that can also be accessed by the external users.

4. A security architecture according to any preceding claim wherein the first server is configured to remove data in a message destining for the interface server when the data is deemed confidential to the security system.

5. A security architecture according to Claim 4, wherein the data is from a broadcasting of the first server to the secondary servers or as a result of responding to a query from one of the external users.

6. A security system according to any preceding claim wherein the private network is a local area network within a premise of the enterprise, and the public network is a data network outside premise of the enterprise.

7. A security architecture comprising:-
a first security system deployed in a first enterprise, the first security system including:-
a first central server configured to provide access control management of first secured files for the first enterprise, each of the first secured files including an encrypted data portion and an access control portion providing restrictive access to the encrypted data portion; and
a number of first local servers coupled to the first central server
over a first private network in the first enterprise;
a second security system deployed in a second enterprise, the second security system including:-
a second central server configured to provide access control management of second secured files for the second enterprise, each of the second secured files including an encrypted data portion and an access control portion providing restrictive access to the encrypted data portion; and
a number of second local servers coupled to the second central
server over a second private network in the enterprise;
and an interface server communicating between the first security system and the second security system, wherein the interface server is in either one of the first local servers or one of the second local servers;
wherein some of the first secured files can be accessed by internal users of the second security system and some of the second secured files can be accessed by internal users of the first security system.

8. A security architecture according to Claim 7, wherein the access control portion in each of the some of the first secured files includes an access policy allowing some of the internal users of the second security system to access the encrypted data potion thereof.

9. A security architecture according to Claim 8, wherein the access policy allows some of the internal users of the first security system to access the encrypted data potion thereof as well.

10. A security architecture according to any one of claims 7 to 9,
wherein the access control portion in each of the some of the second secured files includes an access policy allowing some of the internal users of the first security system to access the encrypted data potion thereof.

11. A security architecture according to any one of claims 7 to 10,
wherein there is a partnership relationship between some of the internal users of the first security system and some of the internal users of the second security system such that some of the first secured files and some of the second secured files can be commonly accessed by the some of the internal users of the first security system and the second security system.

12. A security architecture according to Claim 11, wherein the some of the internal users of the first security system and the second security system are permitted to respectively query membership information of each other.

13. A security architecture according to any one of claims 7 to 12,
wherein the first security system further includes:-
at least one client not affiliated with the first enterprise and coupled to a public network; and
wherein the access control portion of some of the first secured files includes an access policy for external users of the at least one client so that the external users can access some of the first secured files.

14. A security architecture according to any one of claims 7 to 13,
wherein the second security system further includes:-
at least one client not affiliated with the second enterprise and coupled to a public network; and
wherein the access control portion of some of the second secured files includes an access policy for external users of the at least one client so that the external users can access some of the second secured files.

15. A security architecture according to any one of claims 7 to 14,
wherein the external users of the at least one client are not permitted to query any information about the internal users of the first security system.
